# EUROPÄISCHE PATENTANMELDUNG

(11) **EP 1 460 330 A2**
(43) Veröffentlichungstag der Anmeldung: **22.09.2004**
(21) Anmeldenummer: 04005394.4
(22) Anmeldetag: 06.03.2004
(51) Int. Cl.: F16P 1/00

(54) **Rollenaufhängung für eine längenveränderliche Maschinen-Schutzabdeckung**

(30) Priorität: 21.03.2003 DE 20304672 U
(71) Anmelder: HEMA Maschinen- und Apparateschutz GmbH, 63500 Seligenstadt (DE)
(72) Erfinder: Walter, Dieter, 63500 Seligenstadt (DE); Walter, Steffen, 63110 Rodgau-Jügesheim (DE)
(74) Vertreter: Schumacher, Bernd, Dipl.-Ing.

(57) **Zusammenfassung**

Rollenaufhängung für eine vertikal aufgehängte, in horizontaler Richtung längenveränderliche Maschinen-Schutzabdeckung (28) mit einer horizontalen Rollenführung (10) in Form eines einen durchgehenden Längsschlitz aufweisenden metallischen Kastenprofils und mit Rollenhaltern (14), die jeweils einen länglichen, flachen, metallischen Haltesteg (16) aufweisen, an dessem oberen Ende beidseitig je eine drehbare Laufrolle (18) gehalten ist und dessen unteres Ende mit einem oberseitigen Rand eines Faltenbalges verbindbar ist, wobei der Haltesteg (16) mit Bewegungsspiel durch den Längsschlitz greift und die beiden Laufrollen (18) an diesen angrenzend auf den Innenseiten des Profils abrollen.

Um ohne Gefahr einer Bewegungsblockierung große Verfahrgeschwindigkeiten bei guter Führungsfunktion, geringer Geräuschentwicklung und langzeitigem Betrieb zu ermöglichen, wird erfindungsgemäß vorgeschlagen, daß die zu den Rändern des Längsschlitzes weisenden metallischen Oberflächen des Haltesteges (16) und/oder die zu dem Haltesteg (16) weisenden metallischen Ränder des Längsschlitzes des Profils mit einer Gleitschicht aus einem abriebfesten Gleitwerkstoff ausgebildet sind.

## Beschreibung

Die Erfindung betrifft eine Rollenaufhängung für eine vertikal aufgehängte, in horizontaler Richtung längenveränderliche Maschinen-Schutzabdeckung mit einer horizontalen Rollenführung in Form eines einen durchgehenden Längsschlitz aufweisenden metallischen Kastenprofils und mit Rollenhaltern, die jeweils einen länglichen, flachen, metallischen Haltesteg aufweisen, an dessem oberen Ende beidseitig je eine drehbare Laufrolle gehalten ist und dessen unteres Ende mit einem oberseitigen Rand eines Faltenbalges verbindbar ist, wobei der Haltesteg mit Bewegungsspiel durch den Längsschlitz greift und die beiden Laufrollen an diesen angrenzend auf den Innenseiten des Profils abrollen.

Bei einer derartigen Rollenaufhängung für teils sehr schnell bewegte Maschinen-Schutzabdeckungen, wie Faltenbälge, besteht das Problem, daß die Rollenhalter nicht nur die beabsichtigten Längsbewegungen in Längsrichtung der Rollenführung durchführen, sondern von der längenveränderlichen Schutzabdeckung auch zu erheblichen seitlichen Verschiebungs- und Kippbewegungen sowie zu Verschwenkungen um vertikale Achsen gezwungen werden. Das führt zu gegenseitigen Materialberührungen zwischen den Haltestegen der Rollenhalter sowie den seitlichen Begrenzungen des Längsschlitzes der Rollenaufhängung und damit zu entsprechenden Verschleißerscheinungen und störenden Geräuschen. Es können auch leicht bewegungshindernde Verkantungen der Haltestege in dem Längsschlitz der Rollenführung auftreten. Einerseits sollte der Längsschlitz wegen der Führungsfunktion der Rollenführung eine nicht zu große Schlitzbreite haben, andererseits darf diese Schlitzbreite aber auch nicht zu klein sein, damit ein ausreichendes, durch die Schutzabdeckung vorgegebenes Bewegungsspiel möglich ist und große Geschwindigkeiten bei vertretbarem Bewegungswiderstand sowie begrenzter Abnutzung und Geräuschentwicklung zugelassen werden können.

Der vorliegenden Erfindung liegt die Aufgabe zugrunde, eine Rollenaufhängung der genannten Art mit einfachen Maßnahmen so auszubilden, daß unter Vermeidung der geschilderten Nachteile ohne Gefahr einer Bewegungsblockierung große Verfahrgeschwindigkeiten bei guter Führungsfunktion, geringer Geräuschentwicklung und langzeitigem Betrieb möglich sind.

Zur Lösung der gestellten Aufgabe zeichnet sich eine Rollenaufhängung der im Oberbegriff von Anspruch 1 genannten Art erfindungsgemäß durch die im Kennzeichen dieses Anspruchs aufgeführten Merkmale aus, nämlich dadurch, daß die zu den Rändern des Längsschlitzes weisenden metallischen Oberflächen des Haltesteges und/oder die zu dem Haltesteg weisenden metallischen Ränder des Längsschlitzes des Profils mit einer Gleitschicht aus einem abriebfesten Gleitwerkstoff ausgebildet sind.

Diese Maßnahmen gewährleisten einen langlebigen Betriebsablauf auch bei höheren Geschwindigkeiten. Wegen der guten Gleiteigenschaften kann eine vergleichsweise kleine Breite des Längsschlitzes gewählt werden, was die Führungsgenauigkeit der Aufhängung verbessert, ohne einen erhöhten Verschleiß und eine bewegungsblockierenden Verkantung zu begründen. Außerdem wird wegen der verbesserten Gleiteigenschaften die Geräuschentwicklung reduziert.

Während gemäß Anspruch 2 die Außenseiten des Haltesteges eine vollflächig ausgebildete Gleitschicht aufweisen können, genügt es gemäß Anspruch 3, die Gleitschicht des Haltesteges im Bereich des Längsschlitzes nur teilflächig auszubilden.

Nach Anspruch 4 kann die Gleitschicht als eine filmartige oder plattenförmige Beplankung ausgebildet sein, die gemäß der Weiterbildung von Anspruch 5 durch eine Kleboder Nietverbindung angebracht sein kann.

Gemäß den Ansprüchen 6 bis 9 kann die Gleitschicht aus verschiedenen Gleitwerkstoffen bestehen, die ausreichend abriebfest sind und gute Gleit- sowie Geräuschminderungseigenschaften haben.

Gemäß Anspruch 10 haben sich als Gleitschichten für den Längsschlitz auch L-förmige Beplankungen bewährt, die einfach anzubringen, wie anzukleben, sind.

Die weiteren Ausgestaltungen der Ansprüche 11 bis 14 führen zu einer weiteren Geräuschreduzierung und Verlängerung der Lebensdauer der Rollenaufhängung.

Die Erfindung wird nachstehend an zeichnerisch dargestellten Ausführungsbeispielen näher erläutert. Es zeigen:
- Fig. 1: eine Rollenaufhängung für eine Maschinen-Schutzabdeckung in einer vereinfachten, geschnittenen Seitenansicht,
- Fig. 2: die Rollenaufhängung in einem Schnitt längs der Linie II-II aus Fig. 1,
- Fig. 3: einen vergrößerten Bereich der Rollenaufhängung aus Fig. 1,
- Fig. 4: eine mit einem aufgesetzten Laufring ausgebildete Laufrolle eines Rollenhalters,
- Fig. 5: in einer vergrößerten Detailansicht einen mit beidseitigen Gleitschichten ausgebildeten Haltesteg eines Rollenhalters im Bereich eines Längsschlitzes einer Rollenführung und
- Fig. 6: in einer vergrößerten Detailansicht einen durch L-förmige Gleitschichten geschützten Längsschlitz einer Rollenführung.

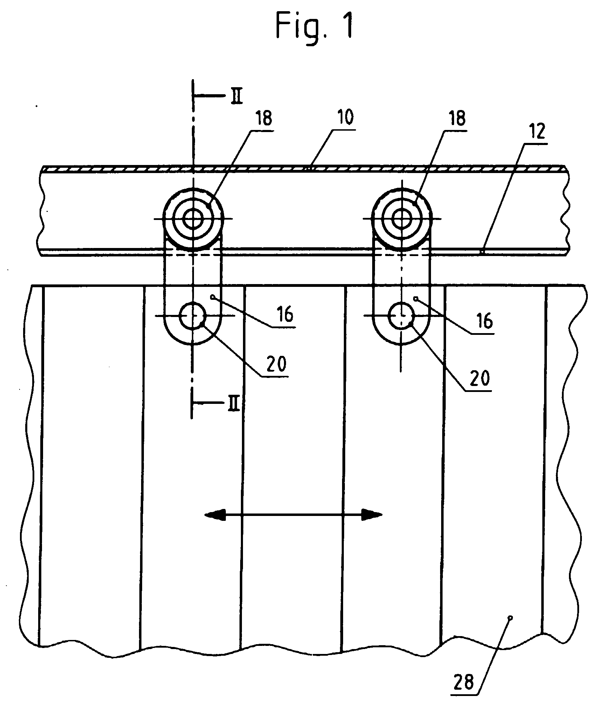

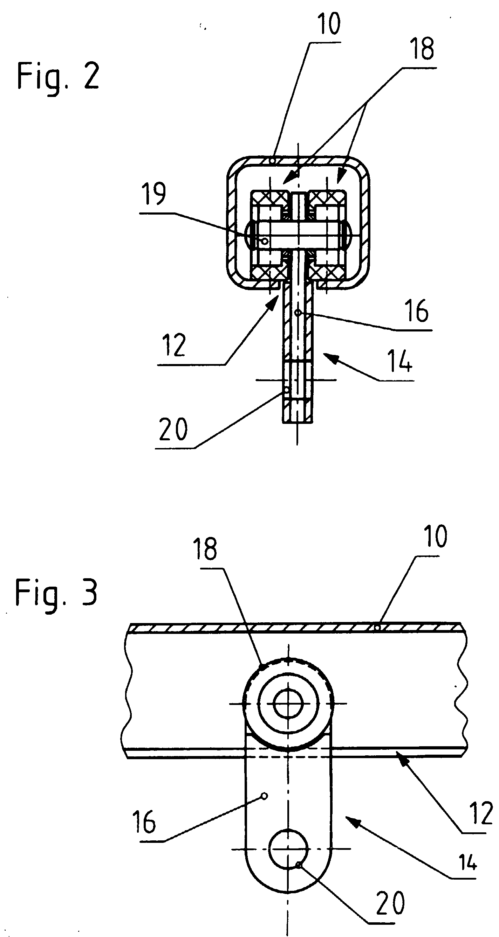

Gemäß den Figuren 1 bis 3 ist eine Rollenführung 10 als mit einem unterseitigen Längsschlitz 12 versehenes metallisches Kastenprofil ausgebildet, das in horizontaler Ausrichtung an einer Maschine oder in einem Raum angebracht ist.

Ein Rollenhalter 14 hat einen flachen, länglichen Haltesteg 16. An dessem in Arbeitslage oberen Ende befindet sich ein beidseitig vorstehender Rollenlagerstift 19 mit darauf befindlichen Laufrollen 18. Am entgegengesetzten und in Arbeitslage unteren Ende ist der Haltesteg 16 mit einem Befestigungsloch 20 versehen, über das eine in horizontaler Doppelpfeilrichtung bewegliche, längenveränderliche Maschinen-Schutzabdeckung 28, wie ein Faltenbalg oder eine sonstige Schutzabdeckung, oberseitig befestigt werden kann. Die Haltestege 16 mehrerer Rollenhalter 14 greifen durch den Längsschlitz 12 der Rollenführung 10 in der Weise, daß die Laufrollen 18 auf den innenseitigen Rändern des Kastenprofils abgestützt sind und abrollen.

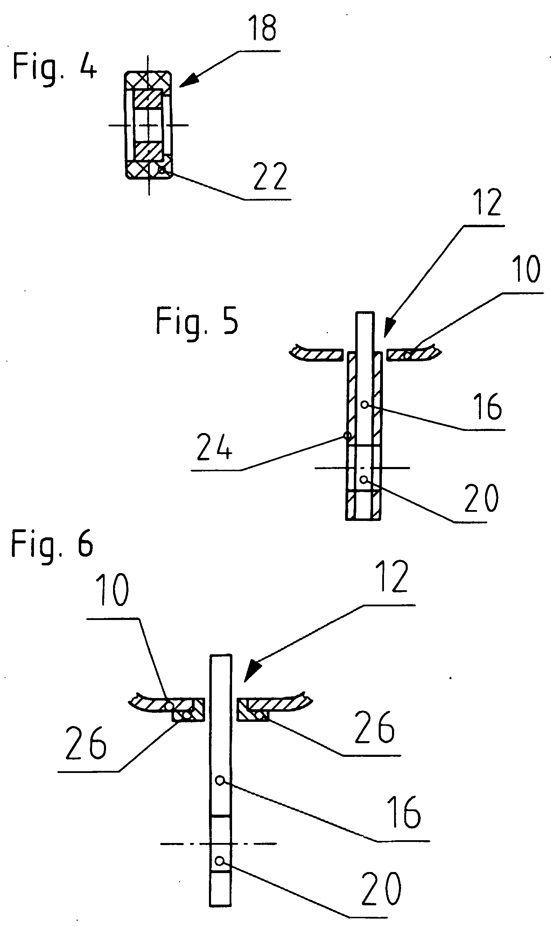

Gemäß Fig. 4 können die Laufrollen 18 Laufringe 22 aus Kunststoff, POM (Polyacetal) oder einem besonders geeigneten Metall aufweisen, damit ein ruhiger, schonender, langlebiger Betriebsablauf erzielbar ist. Auch können die Laufrollen kugelgelagert sein.

Insbesondere dann, wenn die Maschinen-Schutzabdeckung 28 in Form eines Faltenbalges ausgebildet ist, erzwingt diese vor allem bei schnellen Längsbewegungen starke, von einer reinen Längsbewegung abweichende Bewegungen des Rollenhalters 14, wie seitliche Verschiebungen sowie Verschwenkungen und Verdreh- bzw. Verkantungsbewegungen um eine vertikale Achse. Dabei kommt es zu starken Berührungen zwischen dem den Längsschlitz 12 durchdringenden Haltesteg 16 des Rollenhalters 14 und den seitlichen Begrenzungen des Längsschlitzes 12. Während hierdurch beim Stand der Technik starke Reibungen und Abnutzungen, teilweise sogar bewegungsblockierende Verkantungen, und eine erhebliche Geräuschbelästigung auftreten, wird dieses im Rahmen der vorliegenden Erfindung durch aus geeigneten Gleitwerkstoffen bestehende Gleitschichten 24 bzw. 26 verhindert. Die Gleitschichten 24 können gemäß Fig. 5 den Haltesteg 16 allseitig oder auch nur an den zu den Rändern des Längsschlitzes 12 weisenden, einander gegenüberliegenden Oberflächen vollflächig bedecken. Hierbei genügt es allerdings bereits, nur die Bereiche des Haltestegs 16 teilflächig zu bedecken, die den Rändern des Längsschlitzes 12 unmittelbar benachbart sind, also mit diesen in Berührung kommen können. Zusätzlich oder stattdessen ist es gemäß Fig. 6 auch möglich, die inneren Begrenzungen des Längsschlitzes 12 mit einer Gleitschicht 26 zu versehen. Das kann beispielsweise dadurch erfolgen, daß L-förmige Profile aus einem Gleitwerkstoff eingepaßt und angeklebt werden, die die Längsschlitze 12 innenseitig begrenzen und sich um den unteren Rand derselben erstrekken. Dabei ist es ausreichend, daß die L-förmigen Profile nur an der Unterseite des Kastenprofils an diesem befestigt, wie angeklebt, werden.

Für die Gleitschichten 24. bzw. 26 können verschiedene Gleitwerkstoffe eingesetzt werden, beispielsweise filmartige oder plattenförmige feste Gleitwerkstoffe aus PE (Polyäthylen), Teflon, POM (Polyacetal) oder aufstreichbare, aushärtbare Gleitpasten, wie eine Gleitpaste auf Diamantbasis. Wichtig ist dabei stets, daß der Gleitwerkstoff sehr gute Gleiteigenschaften und eine große Abriebfestigkeit aufweist sowie geräuschmindernd wirkt. Ferner ist es möglich, den eingesetzten Gleitwerkstoff zusätzlich zu schmieren bzw. zu ölen, was beispielsweise durch eine ständige oder sich wiederholende maschinenseitige Ölversorgung erfolgen kann.

## Patentansprüche

1. Rollenaufhängung für eine vertikal aufgehängte, in horizontaler Richtung längenveränderliche Maschinen-Schutzabdeckung mit einer horizontalen Rollenführung in Form eines einen durchgehenden Längsschlitz (12) aufweisenden metallischen Kastenprofils (10) und mit Rollenhaltern (14), die jeweils einen länglichen, flachen, metallischen Haltesteg (16) aufweisen, an dessem oberen Ende beidseitig je eine drehbare Laufrolle (18) gehalten ist und dessen unteres Ende mit einem oberseitigen Rand eines Faltenbalges (28) verbindbar ist, wobei der Haltesteg mit Bewegungsspiel durch den Längsschlitz greift und die beiden Rollen an diesen angrenzend auf den Innenseiten des Profils abrollen,
**dadurch gekennzeichnet,**
**daß** die zu den Rändern des Längsschlitzes (12) weisenden metallischen Oberflächen des Haltesteges (16) und/oder die zu dem Haltesteg (16) weisenden metallischen Ränder des Längsschlitzes (12) des Profils (10) mit einer Gleitschicht (24, 26) aus einem abriebfesten Gleitwerkstoff ausgebildet sind.

2. Rollenaufhängung nach Anspruch 1, **dadurch gekennzeichnet, daß** die zu den Rändern des Längsschlitzes (14) weisenden Oberflächen des Haltesteges (16) vollflächige Gleitschichten (24) aufweisen.

3. Rollenaufhängung nach Anspruch 1, **dadurch gekennzeichnet, daß** die den Rändern des Längsschlitzes (14) benachbarten Oberflächen des Haltesteges (16) teilflächige Gleitschichten (24) aufweisen.

4. Rollenaufhängung nach einem der Ansprüche 1 bis 3, **dadurch gekennzeichnet, daß** die Gleitschicht (24, 26) als eine filmartige oder plattenförmige Beplankung ausgebildet ist.

5. Rollenaufhängung nach Anspruch 4, **gekennzeichnet durch** eine Kleb- oder Nietverbindung zwischen der Gleitschicht (24, 26) und dem Haltesteg (16) und/oder dem Längsschlitz (14) bzw. dem Profil (10) der Rollenführung.

6. Rollenaufhängung nach einem der Ansprüche 1 bis 5, **dadurch gekennzeichnet, daß** die Gleitschicht (24, 26) aus einem Kunststoff besteht.

7. Rollenaufhängung nach Anspruch 6, **dadurch gekennzeichnet, daß** die Gleitschicht (24, 26) aus PE (Polyäthylen), Teflon, POM (Polyacetal) oder einem Gleitwerkstoff für Führungen besteht.

8. Rollenaufhängung nach einem der Ansprüche 1 bis 6, **dadurch gekennzeichnet, daß** die Gleitschicht (24, 26) aus einer oberflächig aufstreichbaren, aushärtbaren Gleitpaste besteht.

9. Rollenaufhängung nach Anspruch 8, **dadurch gekennzeichnet, daß** die Gleitschicht (24, 26) aus einer Paste auf Diamantbasis besteht.

10. Rollenaufhängung nach einem der Ansprüche 1 bis 9, **dadurch gekennzeichnet, daß** die Gleitschichten (24, 26) als L-förmige Beplankungen ausgebildet sind, die die Ränder des Längsschlitzes (14) überdeckend an der Unterseite des Profils (10) befestigt sind.

11. Rollenaufhängung nach einem der Ansprüche 1 bis 10, **dadurch gekennzeichnet, daß** die Laufrollen (18) Laufringe (22) aus geräuschminderndem Material aufweisen.

12. Rollenaufhängung nach Anspruch 10, **dadurch gekennzeichnet, daß** die Laufringe (22) aus Kunststoff, POM (Polyacetal) oder einem geeigneten Metall bestehen.

13. Rollenaufhängung nach einem der Ansprüche 1 bis 12, **dadurch gekennzeichnet, daß** die Laufrollen (18) kugelgelagert sind.

14. Rollenaufhängung nach einem der Ansprüche 1 bis 13, **dadurch gekennzeichnet, daß** die Gleitschicht (24, 26) mit einer Schmierung, wie einer maschinenseitigen Ölschmierung, versehen ist.
